(19) Europäisches Patentamt
European Patent Office
Office européen des brevets

(11) **EP 3 754 828 A1**

(12) **EUROPEAN PATENT APPLICATION**

(43) Date of publication:
**23.12.2020 Bulletin 2020/52**

(51) Int Cl.:
*H02M 3/155* (2006.01)  *H02M 3/158* (2006.01)
*H02M 1/14* (2006.01)  *H02M 1/00* (2006.01)

(21) Application number: **19180419.4**

(22) Date of filing: **17.06.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Christian-Albrechts-Universität zu Kiel**
**24118 Kiel (DE)**
• **Universidad de Sevilla**
**41013 Sevilla (ES)**

(72) Inventors:
• **García Franquelo, Leopoldo**
**41012 Sevilla (ES)**

• **Vázquez Pérez, Sergio**
**41012 Sevilla (ES)**
• **León Galván, José Ignacio**
**41300 Sevilla (ES)**
• **Márquez Alcaide, Abraham**
**41015 Sevilla (ES)**
• **Ko, Young Jong**
**34112 Daejeon (KR)**
• **Liserre, Marco**
**24248 Mönkeberg (DE)**
• **Andresen, Markus**
**24116 Kiel (DE)**

(74) Representative: **Gramm, Lins & Partner Patent- und Rechtsanwälte PartGmbB Freundallee 13a 30173 Hannover (DE)**

(54) **METHOD FOR CONVERTING ELECTRICAL POWER, COMPUTER PROGRAM AND ELECTRICAL POWER CONVERTER**

(57) Method for converting electrical power from a primary electrical supply network into a secondary electrical supply network using an electrical power converter, wherein the electrical power converter comprises a plurality of converter circuits which are operated in an electrically parallel arrangement towards the primary and/or secondary electrical supply network, wherein the power conversion of the converter circuits is operated in an angle control mode controlled by a management unit, wherein the angle control mode comprises synchronized or interleaved angles between the converter circuits, wherein the synchronized or interleaved angles are modified during runtime of the power converter, characterized in that the synchronized or interleaved angles are determined based upon at least one strain parameter of at least one energy storage component connected to the electrically parallel arrangement of the converter circuits.

Fig. 1

**Description**

The invention is related to a method for converting electrical power from a primary electrical supply network into a secondary electrical supply network using an electrical power converter, wherein the electrical power converter comprises a plurality of converter circuits which are operated in an electrically parallel arrangement towards the primary and/or secondary electrical supply network, wherein the power conversion of the converter circuits is operated in an angle control mode controlled by a management unit, wherein the angle control mode comprises interleaving angles between the converter circuits, wherein the interleaving angles are modified during runtime of the power converter. The invention is further related to a computer program for execution of such a method and an electrical power converter for converting electrical power from a primary electrical supply network into a secondary electrical supply network.

Generally speaking, the invention relates to electrical power supply where converter circuits are operated in parallel but not synchronously, but with synchronized or interleaved angles between the several converter circuits. In such angle control mode the converter circuits are not switched at the same time, but with a certain delay which is expressed in such synchronized or interleaved angles between the switching signals.

It is an object of the present invention to improve the electrical power conversion in such kind of electrical power converters.

The object of the invention is achieved by a method of the above mentioned kind, wherein the interleaving angles are determined based upon at least one strain parameter of at least one energy storage component connected to the electrically parallel arrangement of the converter circuits. It has been found that due to several influencing factors it is possible that the parallely operated converter circuits may have unbalanced phases of operation, e.g. phases where the portion of higher harmonics is increased. Such unbalanced operation could cause additional strain on the at least one common energy storage component which is connected to the electrically parallel arrangement of the converter circuits. Such strain (or stress) on the energy storage component could reduce the lifetime of the energy storage component and therefore it could reduce the lifetime or at least the maintenance interval of the whole electrical power converter. Through the method of the invention it is possible to reduce the strain parameter of the at least one energy storage component by control of the interleaving angles. In particular, the interleaving angles could be separately modified, which means that a variable-angle synchronized or interleaved operation of the converter circuits can be applied. The energy storage component may be e.g. a capacitor, a battery or a circuitry comprising capacitors and/or batteries.

According to an advantageous embodiment of the invention, it is proposed that the at least one strain parameter of the energy storage component is the frequency spectrum of the current induced in the energy storage component by the operation of the converter circuits, the electrical power dissipation loss of the energy storage component, the electrical loss resistance of the energy storage component, the storage capacity of the energy storage component and/or the temperature of the energy storage component. In particular, it has been found that harmonics in a certain frequency range, for example in the lower frequency range, could adversely affect the lifetime of the energy storage component. Therefore, the term "frequency spectrum" means either the whole frequency spectrum or at least a part or certain parts of the frequency spectrum, for example in a certain range of harmonics. The harmonics can be e.g. harmonics of pulsed control signals by means of which the several converter circuits are controlled, e.g. switched.

Besides the frequency spectrum, also one or more of the other strain parameters mentioned above could be used for minimizing the strain loaded on the energy storage component. For example, the method can be performed on the basis of algorithmic calculations of one or more strain parameters, or by measuring one or more of the mentioned strain parameters, or a combination thereof.

According to an advantageous embodiment of the invention, it is proposed that the synchronized or interleaved angles are determined based upon a frequency analysis of the at least one strain parameter. For example, the frequency spectrum of the current injected in the energy storage component by the operation of the converter circuits can be analyzed, for example using a Fourier transformation. This allows for an easy and efficient implementation of the method of the invention, for example by using a computer program. The program code can be run into a local controller or whatever.

According to an advantageous embodiment of the invention, it is proposed that the synchronized or interleaved angles are determined based upon a cost function characterizing the at least one strain parameter over a frequency range. Such cost function can be easily implemented in the management unit, e.g. in the form of a computer program. For optimizing the at least one strain parameter the minimum of the cost function can be searched by a searching algorithm while the electrical power converter is running.

According to an advantageous embodiment of the invention, it is proposed that the synchronized or interleaved angles are determined by seeking a minimum of the cost function. This allows for a simple recursive searching algorithm to find a minimum value of the cost function. In such way, the method can be executed permanently during runtime of the electrical power converter. This can be done e.g. by iteratively seeking a minimum of the cost function, which means by a recursive algorithm, or by genetic algorithms, artificial intelligence and/or even cloud-based computing and so on.

The object of the invention is also achieved by a computer program with program code, arranged for execution of a method of the aforementioned kind, if the program code is executed on a computer. By such computer program the same advantages can be realized as mentioned before.

The object of the invention is further achieved by an electrical power converter for converting electrical power from a primary electrical supply network into a secondary electrical supply network, wherein the electrical power converter comprises:

- a plurality of converter circuits which are connected in an electrically parallel arrangement towards the primary and/or secondary electrical supply network,
- at least one energy storage component connected to the electrically parallel arrangement of the converter circuits,
- at least one management unit which is arranged for controlling the synchronized or interleaved angles between the converter circuits,

wherein the management unit comprises at least a computer and a memory component wherein a computer program is stored in the memory component which is arranged for execution of a method of the aforementioned kind, if the program code of the computer program is executed on the computer. By such electrical power converter the same advantages can be realized as mentioned before.

The computer can be any commercially available computer, like a PC, Laptop, Notebook, Tablet or Smartphone, or a microprocessor, microcontroller or FPGA, or a combination of such elements.

The present invention is particularly effective in case that the converter circuits are only connected in parallel on one side, either on the primary or the secondary electrical supply network. In practice such circuit structure can result in significant unbalanced situations, for example in case of photovoltaic inverters in a multi-string photovoltaic system. The unbalanced situation may result from different sun irradiation situations on the several photovoltaic modules.

The at least one energy storage component may be connected in parallel to the side of the converter circuits where the converter circuits are converted in parallel. For example, in the mentioned multi-string photovoltaic system the energy storage component may be the output capacitor of the parallel arrangement of the converter circuits.

The converter circuits may be DC-DC-converters or any other type of converters which have a direct current (DC) network on the side where the converter circuits are connected in parallel.

The converter circuits may form a multi-cell buck converter or a multi-cell boost converter with a number of n cells. Each cell is established by a converter circuit. For example, in many applications the value of n is 3.

The invention is now further described using examples depicted in drawings.

The drawings show

Figure 1    a first embodiment of an electrical power converter and
Figure 2    a second embodiment of an electrical power converter and
Figure 3    a third embodiment of an electrical power converter and
Figure 4    time diagrams of operating parameters and
Figure 5    a converter circuit and its timing diagram and
Figure 6    a recursive searching algorithm.

Nowadays, the society increasing power demand is pushing the academia and industry to develop new solutions where the power conversion systems are efficiently designed in terms of economical cost, volume, weight, reliability, reduced power losses, availability and fault tolerant capability.

In a wide range of applications the use of several converter circuits working in parallel is very convenient in order to share the nominal power, increase the fault tolerant capability and reduce the requirements of the output filters. In this way, the interleaving operation of power converters is a well-known solution for applications such as power supplies and renewable energies integration.

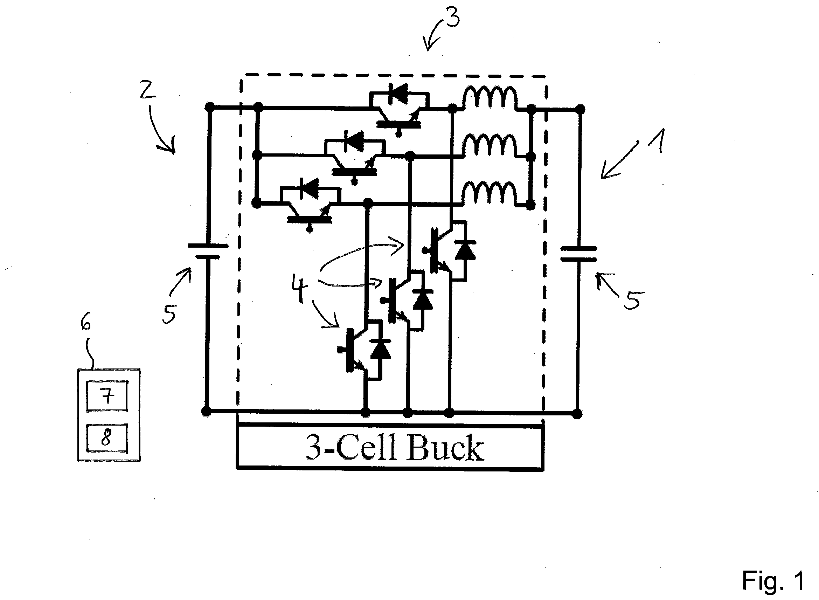

In power supplies, the main advantage of using synchronized or interleaved power converters is the improvement of the output waveforms reducing the ripples and the harmonic distortion leading to a reduction of the output filter. An example of this is shown in Fig. 1 where the power supply is formed by three buck converters working in parallel achieving a very reduced output voltage ripple thanks to the synchronized or interleaved operation of the power modules.

Each of the three buck converters embodied in the form of a converter circuit 4 comprising a transistor which is switched with a certain switching frequency, an inductance and in series with the inductance another transistor or a diode.

The converter circuits 4 are controlled by a management unit 6 which generates the switching signals for switching the transistors of the converter circuits 4. The management unit 6 comprises a computer 7 and a memory component 8 which is connected with a computer 7. In the memory component 8 a computer program is stored which is used for generating the switching signals for the transistors and for executing the method of the invention.

The electrical power converter 3 is connected on the one side to a primary electrical supply network 1 and on the other side to a secondary electrical supply network 2. On both sides or maybe only on one side an energy storage component 5 can be connected to the electrical power converter 3.

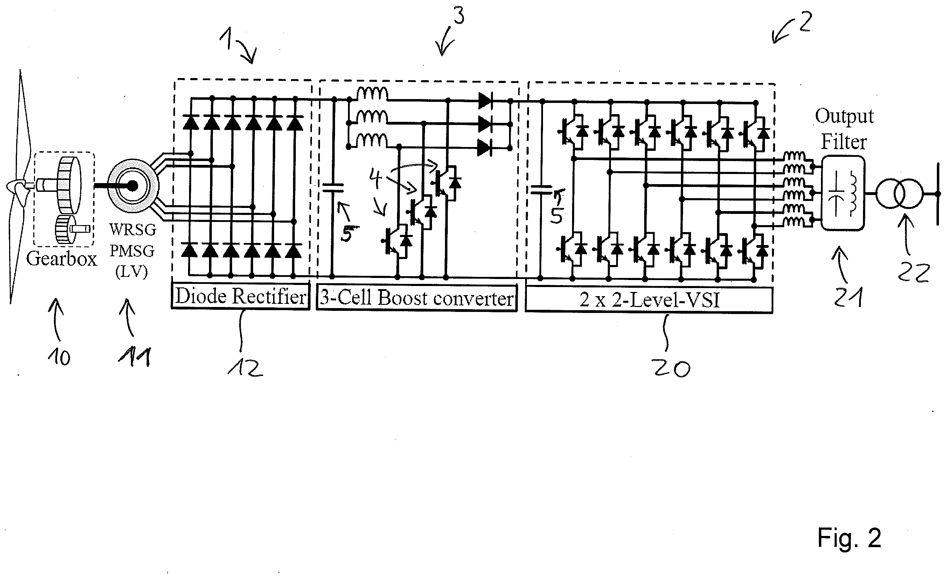

In the case of the renewable energy integration, the synchronized or interleaved operation is used mainly in order to develop a power sharing between the power modules. For instance, in the case of wind power systems, some commercial solutions present a power conversion system with multiple boost DC-DC converters with input and output parallel connection in order to share the power between all the converter circuits 4. In this way, the sizing of the converter circuits 4 is simpler using power devices with reduced maximum current requirements. This wind energy conversion system is shown in Fig. 2.

In figure 2 a wind energy propeller is connected via a gear box 10 to a three phase generator 11. The three phase generator 11 is connected by a diode rectifier 12 to an electrical power converter 3, which is in this case a 3-cell boost converter. The output of the electrical power converter 3 is connected via a 2x2-level-VSI 20 and an output filter 21 to an electrical network 22.

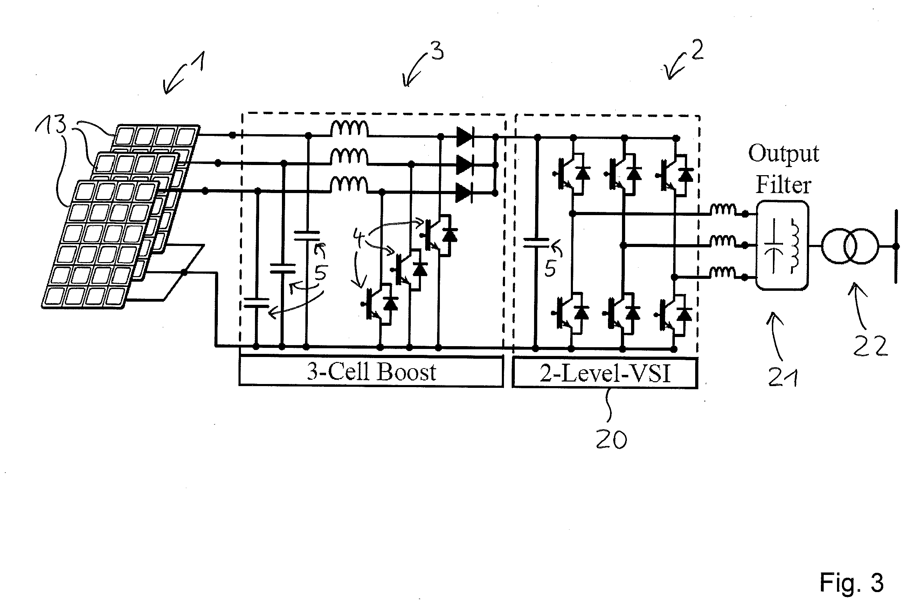

On the other hand, in the solar photovoltaic (PV) application, the well-known medium-power multi-string solar photovoltaic energy conversion systems present synchronized or interleaved boost DC-DC converter circuits. Each DC-DC converter circuit input is connected to a PV array and all the DC-DC converter circuit outputs are connected to a common DC-link. This structure is better than the central PV inverters solution from the maximum power point tracking point of view and also improves the fault tolerant capability of the system (allowing to be still in operation even if a DC-DC converter fails). The typical structure of a multi-string PV system is shown in Fig. 3.

In figure 3 three photovoltaic (PV) arrays 13 are connected to the electrical power converter 3. There is each PV array 13 connected to its associated converter circuit 4. The electrical power converter 3 is connected via a 2-level-VSI 20 and an output filter 21 to an electrical network 22.

It is important to notice that all commercial power converters have to take into account other features such as the lifetime and the failures in time (FITs) of the components that form the power modules. The sizing of the components has to be carefully chosen to meet the regulations and, also very important, robustness and aging tests need to be carried out in order to provide a minimum guarantee to the client.

In this way, the aging of the devices in a power conversion system is closely related to the thermal stress. Recently, power conversion systems models can include thermal analysis of the components and the lifetime and at least one of the Remaining useful lifetime, Lifetime and Failure probability of each component can be estimated taking into account the operation of the converter, the ambient temperature and the cooling system implemented in the converter (natural convection, forced air, water cooled, etcetera).

It can be noticed that the use of synchronized or interleaved power converters presents advantages from the thermal stress point of view. The synchronized or interleaved operation provides natural power sharing, the output waveforms ripples are reduced and their harmonic distortions are moved to higher frequencies. This is achieved at the expense of introducing several power modules working in interleaving instead of using only one large power module. So, there is a trade-off between the thermal stress of the power system and its economical cost.

In the following example, the conventional structure of a multi-string PV system shown in Fig. 3 is chosen to carry out different lifetime tests. The system has been tested considering different sun irradiation conditions. As will be shown in next sections, it can be affirmed that lifetime of the common DC-link capacitor 5 is compromised when each PV array 13 has a different irradiation. This situation leads to operate the power conversion system with the boost DC-DC converter circuits 4 working in different operational points (different input voltages, different duty cycles and different power). For instance, this is the typical case when a partial shading is present in the system. The method addressed herein mitigates this problem improving the lifetime of the common DC-link capacitor which is one of the most critical components of the multi-string PV system.

Capacitors are essential components in power converters, but their rating is targeted to be minimized in order to minimize the system costs. At the same time, in power converters capacitors were identified to be among the most frequently failing devices. In order to size the capacitor in a specific application not only for the minimum capacitance, but also for a targeted lifetime, the operation conditions and the failure mechanisms need to be considered. In the following, the thermal stress (or strain) related lifetime model for capacitors is described in order to enable a minimum sizing.

The commonly used capacitors for DC-links in most power electronics applications are aluminum electrolytic capacitors, metalized polypropylene film capacitors and multi-layer ceramic capacitors. The technology choice is dependent on the application related voltage, capacitance and environmental conditions, which result in a sensitivity to costs and reliability. As an example, aluminum electrolytic capacitors are considered to be the cheapest technology with inferior reliability. The film capacitors are considered to more reliable, but they are generally more expensive.

The sizing related stressors for all three considered capacitors types are the applied voltage V, the applied current and the temperature of the capacitor $T_h$. A commonly used model for the lifetime of a capacitor L is given in (1)

$$L_c = L_0 \left( \frac{V}{V_0} \right)^{-n} e^{\left( \frac{E_a}{k_B} \left( T_h^{-1} - T_0^{-1} \right) \right)} \qquad (1)$$

Thereby, $L_0$ is the base lifetime at the voltage $V_0$ at the temperature $T_0$, $E_a$ the activation energy and $k_B$ the Boltzmann constant. For electrolytic capacitors, which are commonly used, this model can be simplified to:

$$L_c = L_0 \left( \frac{V}{V_0} \right)^{-n} 2^{\frac{T_0 - T_h}{10K}} \qquad (2)$$

As it can be seen from this equation, an increase by 10 $K$ results in a reduction of the lifetime by 50 %, demonstrating the importance of the hotspot temperature. Both introduced lifetime models consist of a voltage dependent lifetime part and a temperature dependent part. The voltage-dependence is commonly known and provided in the datasheet of the capacitor, whereas the hotspot temperature of the capacitor depends on the sum of the ambient temperature $T_a$ to the convolution of capacitor losses $P_d$ with the thermal impedance $Z_{th}$. For simplicity, the steady state operation is considered and therefore only the thermal resistance $R_{th}$ is used to derive the hotspot temperature as expressed with (3):

$$T_h = R_{th} P_d + T_a = \Delta T_h + T_a \qquad (3)$$

In this equation, the losses $P_d$ depend on the current applied to the capacitor and the Equivalent Series Resistance (ESR) of the capacitor. In order to take into account the frequency dependence of the ESR, a representation of the applied current as a Fourier series is chosen in (4):

$$P_d = \sum_{h=0}^{\infty} I_{c,h}^2 R_{ESR,h} \qquad (4)$$

In this equation, $I_{c,h}$ is the $h$-harmonic of the capacitor current and $R_{ESR,h}$ is the related ESR for this frequency component. The ESR is dependent on the capacitor technology and the frequency. As an example, the ESR of electrolytic capacitors is higher for low frequency harmonic content than for high frequency content. However, as it can be seen from this equation, the losses and consequently the lifetime of the capacitors are dependent on the capacitor current. This current itself is dependent on the magnitude and its waveform. Particularly, in case of multiple sources connected to the capacitor, the synchronization of these sources is of major importance and results in significantly different stress. As it will be shown in the following, even the commonly applied synchronized or interleaved operation may be an operation point with high stress for the capacitors. In summary, the stress of the DC-link capacitors depends on the operation of the connected converters by means of their switching frequency, their modulation and their synchronization.

The ESR of a capacitor can be separated in three different parts as shown in (5)

$$R_{ESR} = R_{ESR,0} + R_{ESR,f} + R_T^{\frac{T_0 - T_h}{E}} = R_0 + R_T^{\frac{T_0 - T_h}{E}} \qquad (5)$$

The first part $R_{ESR,0}$ is constant, the second part $R_{ESR,f}$ is depended on the frequency content of the capacitor currents and the third part $R_T$ is exponentially dependent on the hotspot temperature. In this application, the constant and the frequency dependent parts are represented by $R_0$.

In the following, the operation of a system is optimized in order to minimize the stress for the capacitors.

The conventional way to operate several DC-DC converters working with input/output parallel connection is usually named interleaving operation. It consist on applying the same duty cycle for each DC-DC converter. In a natural way, the total power is shared between all the power modules. Also, the power system achieves natural fault tolerant capability because the system is not centralized and it can be operating even if some of the DC-DC power modules fail.

However, in order to improve the performance of the system, all the DC-DC converters are not switched at the same instants. The switching of each DC-DC converter is generated by the comparison of the corresponding duty cycle and a high-frequency carrier (usually triangular). The carriers of the DC-DC converters are not in phase. The phase displacement $\alpha$ between carriers in consecutive DC-DC converters can be determined using:

$$\alpha = \frac{360°}{M}, \qquad (6)$$

where $M$ is the number of DC-DC converters of the power conversion system.

The use of this phase displacement between consecutive DC-DC converters introduces several advantages (in addition to the natural power sharing between power modules and fault tolerant capability achieved by using several DC-DC converters working with input/output parallel connection):

- Reduced output current ripple and therefore required the output capacitance.
- Multiplicative switching frequency of the output current.

As an example of the interleaving operation of DC-DC converters, a multi-string PV system formed by three boost DC-DC converters has been tested. All PV arrays have the same irradiance and hence all are working in the same operational point (same PV voltage, PV current and therefore, same duty cycle). The most important parameters and passive elements can be consulted in the following Table I.

| Parameter | Balanced | Unbalanced |
|---|---|---|
| Switching frequency ($kHz$) | 5 | 5 |
| Inductance ($mH$) | 3.6 | 3.6 |
| Output voltage. $V_o$ ($V$) | 300 | 300 |
| PV array average voltage $V_{PVk}$ ($V$) | 160 | [160, 150, 155] |
| PV array average current $I_{PVk}$ ($A$) | 10 | [10, 5, 8] |

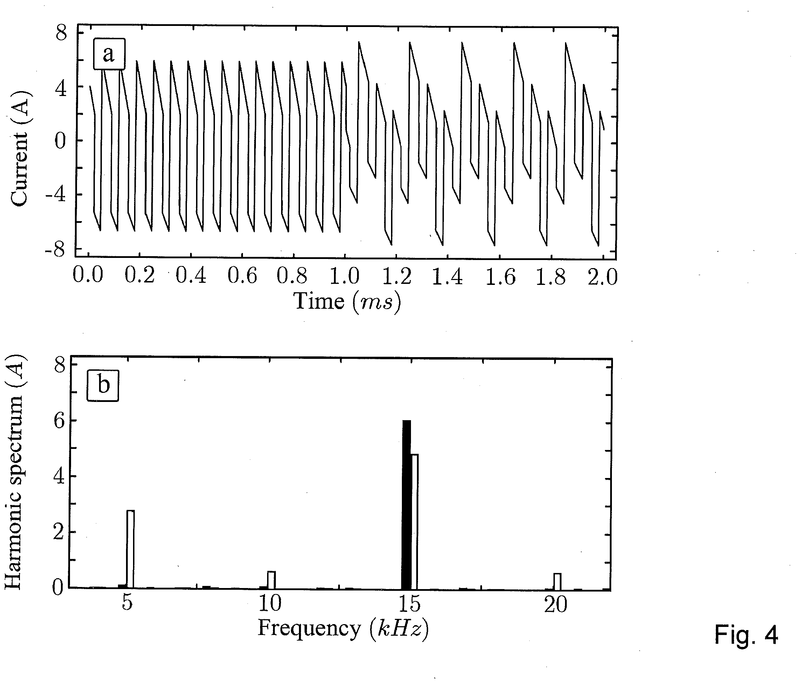

Figure 4 shows in the upper diagram the current that flows to the common DC-link capacitor. In the left part (time 0-1 ms), the current under balanced conditions is shown. In the right part (time 1-2 ms) the current under unbalanced irradiation conditions is shown. The lower diagram in figure 4 shows the corresponding frequency spectrum.

As observed in Fig. 4 (lower diagram), the current that flows to the common DC-link capacitor (addition of the output currents of the DC-DC converters) presents the first harmonic distortion located at M times 5 kHz (15 kHz in this case because M is equal to three). This feature is very beneficial because it leads to a reduction of the required capacitance of the DC-link due to the reduction of the voltage ripple also reducing the thermal stress.

However, this good performance is only present in a balanced operation of the power system. If the multi-string PV system has different irradiance values in each PV array, each DC-DC converter will manage a different power with different PV voltage, PV current and different duty cycles. Under this situation (which is also described in Table I), the conventional interleaving operation of the multi-string PV system achieves the output current shown in Fig. 4. As can be observed, the unbalanced operation of the DC-DC converters increases the current ripple causing an undesirable thermal stress in the common DC-link capacitor. This fact affects directly to the DC-link capacitor lifetime and represents a critical problem in the system as this capacitor is one of the most crucial components in lifetime terms.

In order to mitigate this problem, one possibility is a complete harmonic analysis of the synchronized or interleaved operation of boost DC-DC converters. Taking into account this analysis, a modification of the conventional operation of the synchronized or interleaved power modules is proposed. The method consists on a modification of the phase displacement angles between consecutive power modules. These angles will not be determined by (6) but they will be calculated depending on the instantaneous values of the operation of the DC-DC converters.

In order to study the common DC-link capacitor lifetime, the waveform of the common DC-link capacitor current is deeply analyzed. As it is well-known, using the Fourier expansion series, any periodic signal (under mild assumptions) can be expressed as a DC component plus an infinity sum of sines and cosines. That is:

$$f(t) = \frac{a_0}{2} + \sum_{n=1}^{\infty} \left[ a_n \cos(n\omega t) + b_n \sin(n\omega t) \right], \qquad (7)$$

where $\omega$ is the frequency under study, in this case, the carrier frequency and the coefficients $a_n$ and $b_n$ are defined as:

$$a_n = \frac{1}{T} \int_0^T f(t) \cos(n\omega t) dt$$

$$b_n = \frac{1}{T} \int_0^T f(t) \sin(n\omega t) dt. \qquad (8)$$

In an output parallel connected power converter, each power module has its own Fourier expansion series and the expression of the total output current can be considered as the sum of each Fourier series. In addition, if the popular interleaving technique is used, it is necessary to include phase displacement terms $\phi_k$ in the carrier expression to define the signal properly. As summary, the complete expression for the output current with $M$ power modules using interleaving is:

$$\sum_{k=1}^{M} i_{ak,k}(t) = \sum_{k=1}^{M} \frac{a_{0k}}{2} + \sum_{k=1}^{M} \sum_{n=1}^{\infty} \Big[ a_{nk} \cos(n\omega t - n\phi_k)$$

$$+ b_{nk} \sin(n\omega t - n\phi_k) \Big] \qquad (9)$$

Using the sum and difference angle identities, it is possible to decouple the terms $\cos(n\omega t - n\phi k)$ and $\sin(n\omega t - n\phi k)$ as a sum of products. Then, making groups in terms of $\omega t$, the $n$-th harmonic content of the current that flows through the common DC-link capacitor can be re-written as:

$$i_{c,n}(t) = \cos(n\omega t) \Big[ \sum_{k=1}^{M} a_{nk} \cos(n\phi_k) - b_{nk} \sin(n\phi_k) \Big]$$

$$+ \sin(n\omega t) \Big[ \sum_{k=1}^{M} b_{nk} \cos(n\phi_k) + a_{nk} \sin(n\phi_k) \Big] \qquad (10)$$

Moreover, in order to manage the sine and cosine expressions, they can be re-written in terms of tangent using:

$$\sin(x) = \frac{\tan(x)}{\sqrt{1 + \tan(x)^2}} \quad \cos(x) = \frac{1}{\sqrt{1 + \tan(x)^2}} \qquad (11)$$

Finally, the $n$-th harmonic content of the common DC-link capacitor current can be formulated as:

$$i_{c,n}(t) = \cos(n\omega t) \Big[ \sum_{k=1}^{M} \frac{a_{nk} - b_{nk} \tan(n\phi_k)}{\sqrt{1 + \tan(n\phi_k)^2}} \Big]$$

$$+ \sin(n\omega t) \Big[ \sum_{k=1}^{M} \frac{b_{nk} + a_{nk} \tan(n\phi_k)}{\sqrt{1 + \tan(n\phi_k)^2}} \Big] \qquad (12)$$

It is necessary to notice that the coefficients $a_{nk}$ and $b_{nk}$ depend on the converter topology. The analysis introduced in previous section can be particularized for all synchronized or interleaved DC-DC converter topologies. In this section, the analysis is particularized for the boost topology which is part of the multistring PV system shown in Fig. 3. Figure 3 shows the boost topology and the most important waveforms involved in the power converter operation where $i_{ak}$ is the diode current and $I_L$ represents the average inductor current.

The boost DC-DC converter presents two different operation modes depending on the working operation conditions. If the current through the inductance never reaches the zero value, it is said that the power converter is running in the continuous operation mode. For the sake of simplicity, the boost converter will be analyzed in the continuous operation mode. If the discontinuous operation mode is achieved (the inductance current reaches zero), the analysis to be done is completely analogous.

In continuous operation mode the diode current $i_{ak}(t)$ can be expressed as:

$$i_{ak}(t) = mt + I_L \qquad \text{where} \qquad m = \frac{V_d - V_o}{L} \qquad (13)$$

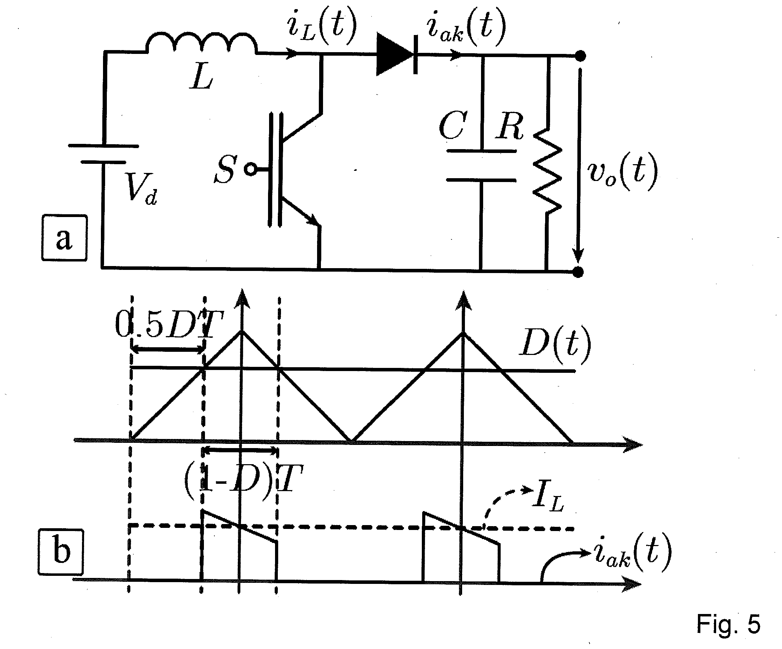

Taking into account (13) and the timing definitions shown in Fig. 5, the Fourier coefficients can be obtained solving (8):

$$a_n = \frac{2}{T} \int_{-\frac{(1-D)T}{2}}^{\frac{(1-D)T}{2}} (I_L + mt) \cos(n\omega t) dt$$
$$= \frac{2I_L}{n\pi} \sin(n\pi(1-D))$$
$$b_n = \frac{2}{T} \int_{-\frac{(1-D)T}{2}}^{\frac{(1-D)T}{2}} (I_L + mt) \sin(n\omega t) dt$$
$$= \frac{mT}{n^2\pi^2} \Big[ \sin(n\pi(1-D)) $$
$$+ n\pi(1-D) \cos(n\pi(1-D)) \Big] \qquad (15)$$

Using the previous analysis, from (12) can be derived that the n-th harmonic distortion value of the common DC-link capacitor is given by

$$\|H_n\| = \Bigg[ \Bigg[ \sum_{k=1}^{M} \frac{a_{nk} - b_{nk}\tan(n\phi_k)}{\sqrt{1 + \tan(n\phi_k)^2}} \Bigg]^2$$
$$+ \Bigg[ \sum_{k=1}^{M} \frac{b_{nk} + a_{nk}\tan(n\phi_k)}{\sqrt{1 + \tan(n\phi_k)^2}} \Bigg]^2 \Bigg]^{\frac{1}{2}} \qquad (16)$$

From section II, it is clear that the capacitor lifetime depends on the harmonic components of its current $I_{c,n}$ as shown in (4). Taking this fact into account, the proposed approach to achieve a lifetime extension is to minimize as much as possible the losses $P_d$ defining a cost function p as a particularization of (4) but only considering m harmonics. For the sake of simplicity, ESR can be considered constant over frequency leading to a cost function equal to

$$\rho = \sum_{n=1}^{m} I_{c,n}^2 = \sum_{n=1}^{m} \|H_n\|^2 \qquad (17)$$

The minimization of p can be achieved by not necessarily applying the classical interleaving angles introduced in (6) but applying other values in the angles $\phi k$ in equation (16).

Based upon these principles, it is now possible to determine the best synchronized or interleaved angle combination in order to fulfil the cost function defined. In this case, the cost function is dealing with the capacitor lifetime improvement. For that, the current harmonic content is minimized accordingly. For finding the minimum of the cost function, different known searching algorithm can be applied, for example the Exhaustive Searching Algorithm (ESA). It is based on the exploration of all possible combinations selecting the choice which fulfil the criteria. In the following, an advanced version of ESA is presented in order to improve the performance. For that, instead of evaluating all points in the first iteration, some of them are evaluated in the first iteration selecting the best one. Using this temporary solution as center point, it is created a new mesh in order to refine the solution found. This process is reiterated up to find the final solution or to achieve the maximum number of iterations.

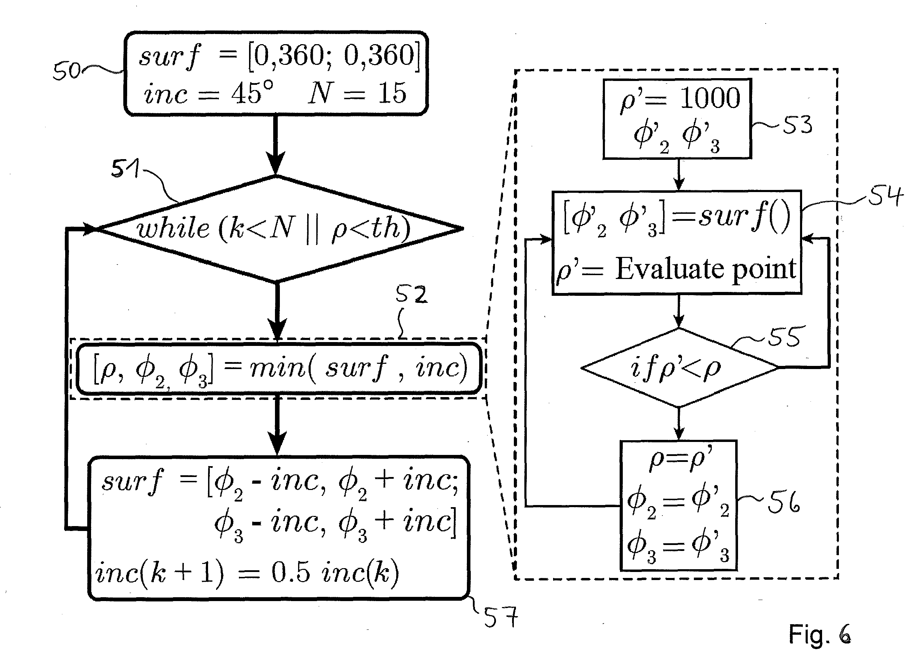

Figure 6 shows a simple method to find, in a recursive way, the angles set that minimizes the cost function $\rho$. In this iterative method, the area to look for the angles set to minimize $\rho$ is called *sur f*. This area is meshed by discrete values each *inc* degrees. Initially *sur f* includes all possible values of $\phi_2$ and $\phi_3$ from 0° to 360°. The mesh is created by applying *inc* = 45°. With these values, 64 possible angles set are evaluated each iteration determining the value of $\rho$ for each one.

Once one iteration is finished, the location of the angles set which minimized p is chosen as the central point of a new surface. Parameter *sur f* is modified correspondingly and the mesh is downsized in order to fit the number of possible angles set to be evaluated each iteration equal to 25. So, each iteration reduces the area to look for the minimum value of $\rho$ reducing as well the mesh. The iterative algorithm finishes when the maximum number of iterations is achieved or when the cost function $\rho$ is less than a pre-defined threshold value *th*.

**Claims**

1. Method for converting electrical power from a primary electrical supply network (1) into a secondary electrical supply network (2) using an electrical power converter (3), wherein the electrical power converter (3) comprises a plurality of converter circuits (4) which are operated in an electrically parallel arrangement towards the primary and/or secondary electrical supply network (1, 2), wherein the power conversion of the converter circuits (4) is operated in an angle control mode controlled by a management unit (6), wherein the angle control mode comprises synchronized or interleaved angles between the converter circuits (4), wherein the synchronized or interleaved angles are modified during runtime of the power converter (3), **characterized in that** the synchronized or interleaved angles are determined based upon at least one strain parameter of at least one energy storage component (5) connected to the electrically parallel arrangement of the converter circuits (4).

2. Method according to claim 1, **characterized in that** the at least one strain parameter of the energy storage component (5) is the frequency spectrum of the current induced in the energy storage component (5) by the operation of the converter circuits (4), the electrical power dissipation loss of the energy storage component (5), the electrical loss resistance of the energy storage component (5), the storage capacity of the energy storage component (5) and/or the temperature of the energy storage component (5).

3. Method according to any of the preceding claims, **characterized in that** the synchronized or interleaved angles are determined based upon a frequency analysis of the at least one strain parameter.

4. Method according to any of the preceding claims, **characterized in that** the synchronized or interleaved angles are determined based upon a cost function characterizing the at least one strain parameter over a frequency range.

5. Method according to claim 4, **characterized in that** the synchronized or interleaved angles are determined by seeking a minimum of the cost function.

6. Computer program with program code, arranged for execution of a method of any of the preceding claims, if the program code is executed on a computer (7).

7. Electrical power converter (3) for converting electrical power from a primary electrical supply network (1) into a secondary electrical supply network (2), wherein the electrical power converter (3) comprises:

   - a plurality of converter circuits (4) which are connected in an electrically parallel arrangement towards the primary and/or secondary electrical supply network (1, 2),
   - at least one energy storage component (5) connected to the electrically parallel arrangement of the converter circuits (4),
   - at least one management unit (6) which is arranged for controlling the synchronized or interleaved angles between the converter circuits (4),

   wherein the management unit (6) comprises at least a computer (7) and a memory component (8) wherein a computer program is stored in the memory component (8) which is arranged for execution of a method according to any of claims 1 to 5, if the program code of the computer program is executed on the computer (7).

Fig. 1

EP 3 754 828 A1

Fig. 2

Fig. 3

Fig. 4

EP 3 754 828 A1

Fig. 5

EP 3 754 828 A1

50 —

$surf = [0,360; 0,360]$
$inc = 45°$ $\quad N = 15$

51 —

$while\ (k{<}N\ ||\ \rho{<}th)$

S2

$[\rho, \phi_2, \phi_3] = min(\ surf\ ,\ inc)$

$surf = [\phi_2 - inc,\ \phi_2 + inc;$
$\phi_3 - inc,\ \phi_3 + inc]$
$inc(k+1) = 0.5\ inc(k)$

57

S3

$\rho' = 1000$
$\phi'_2\ \phi'_3$

S4

$[\phi'_2\ \phi'_3] = surf()$
$\rho' = $ Evaluate point

55

$if\rho'{<}\rho$

56

$\rho = \rho'$
$\phi_2 = \phi'_2$
$\phi_3 = \phi'_3$

Fig. 6

Europäisches
Patentamt

European
Patent Office

Office européen
des brevets

## EUROPEAN SEARCH REPORT

Application Number

EP 19 18 0419

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MARQUEZ ABRAHAM ET AL: "Variable-angle interleaved DC-DC converters", IECON 2016 - 42ND ANNUAL CONFERENCE OF THE IEEE INDUSTRIAL ELECTRONICS SOCIETY, IEEE, 23 October 2016 (2016-10-23), pages 3635-3639, XP033034230, DOI: 10.1109/IECON.2016.7794028 [retrieved on 2016-12-21] | 1-7 | INV. H02M3/155 H02M3/158 H02M1/14 ADD. H02M1/00 |
| Y | * abstract * * page 3635 * * page 3636; figures 1, 3 * * page 3637; figure 8 * ----- | 2 | |
| Y | MARQUEZ ABRAHAM ET AL: "Closed-loop active thermal control via power routing of parallel DC-DC converters", 2018 IEEE 12TH INTERNATIONAL CONFERENCE ON COMPATIBILITY, POWER ELECTRONICS AND POWER ENGINEERING (CPE-POWERENG 2018), IEEE, 10 April 2018 (2018-04-10), pages 1-6, XP033353625, DOI: 10.1109/CPE.2018.8372586 [retrieved on 2018-06-04] * abstract * * figures 1,3 * ----- | 2 | |
| Y | MARQUEZ ABRAHAM ET AL: "Power Device Lifetime Extension of Dc-Dc Interleaved Converters via Power Routing", IECON 2018 - 44TH ANNUAL CONFERENCE OF THE IEEE INDUSTRIAL ELECTRONICS SOCIETY, IEEE, 21 October 2018 (2018-10-21), pages 5332-5337, XP033486625, DOI: 10.1109/IECON.2018.8592912 [retrieved on 2018-12-27] * abstract * ----- | 2 | |

TECHNICAL FIELDS SEARCHED (IPC)

H02M

The present search report has been drawn up for all claims

| Place of search | Date of completion of the search | Examiner |
|---|---|---|
| The Hague | 26 November 2019 | Zeljkovic, Sandra |

EPO FORM 1503 03.82 (P04C01)